# EUROPÄISCHE PATENTSCHRIFT

(11) **EP 1 277 031 B1**
(45) Veröffentlichungstag und Bekanntmachung des Hinweises auf die Patenterteilung: **13.04.2016**
(21) Anmeldenummer: 01940163.7
(22) Anmeldetag: 18.04.2001
(51) Int. Cl.: G01F 1/684, G01F 15/12

(54) **VERFAHREN ZUR ABSCHEIDUNG EINER FLÜSSIGKEIT EINES IN EINER LEITUNG STRÖMENDEN MEDIUMS**
METHOD FOR THE SEPARATION OF A FLUID FROM A MEDIUM FLOWING IN A DUCT
PROCÉDÉ POUR SÉPARER UN LIQUIDE CONTENU DANS UN FLUIDE S'ÉCOULANT DANS UNE CONDUITE

(30) Priorität: 18.04.2000 DE 10019149
(43) Veröffentlichungstag der Anmeldung: 22.01.2003
(73) Patentinhaber: ROBERT BOSCH GMBH, 70442 Stuttgart (DE)
(72) Erfinder: HEINEN, Christian, 70771 Leinfelden-Echterdingen (DE); LENZING, Thomas, 71726 Benningen (DE); REYMANN, Klaus, 70839 Gerlingen (DE); KONZELMANN, Uwe, 71679 Asperg (DE); MIKLEUSCHEWITSCH, Andy, 71277 Rutesheim (DE)
(86) Internationale Anmeldenummer: PCT/DE2001/001492
(87) Internationale Veröffentlichungsnummer: WO 2001/079790

(56) Entgegenhaltungen:
- DE-A- 19 724 659
- DE-A- 19 815 654
- JP-A- 2001 059 755
- US-A- 4 494 405
- PATENT ABSTRACTS OF JAPAN vol. 1999, no. 11, 30. September 1999 (1999-09-30) & JP 11 166720 A (GASTAR CORP), 22. Juni 1999 (1999-06-22)

## Beschreibung

### Stand der Technik

Die Erfindung geht aus von einer Vorrichtung zur Bestimmung zumindest eines Parameters eines strömenden Mediums bzw. einem Verfahren zur Abscheidung einer Flüssigkeit eines in einer Leitung strömenden Mediums nach der Gattung des Anspruchs 1 bzw. des Anspruchs 14.

Es ist schon eine Vorrichtung mit einem Messkanal bekannt (DE 197 35 891 A1), in dem ein Messelement untergebracht ist, dass dort von dem einströmenden Medium umströmt wird. Das Medium strömt von einem Einlasskanal zunächst in einen Umlenkkanal, der einen grösseren Strömungsquerschnitt als der Einlasskanal und ein rechtwinkliges Eck aufweist, so dass ein abrupter Strömungsübergang in Form einer Stufe zum Einlasskanal vorhanden ist. Anschliessend gelangt das Medium von der Ecke des Umlenkkanals umgelenkt, entlang der Randfläche des Umlenkkanals, in einen sich quer anschliessenden Auslasskanal und verlässt diesen aus einer Auslassöffnung, um sich mit dem um die Vorrichtung vorbei strömenden Medium wieder zu vermischen.

Eine Einlass- und eine Auslasskanallängsachse sind um einen vorgegebenen Winkel gegenüber der Leitungslängsachse geneigt, so dass der Einlasskanal einen von einer Hauptströmungsrichtung abgeschatteten Bereich aufweist. Das Messelement ist in dem abgeschatteten Bereich des Messkanals angeordnet, um Verschmutzung und entstehende Defekte des Messelements zu vermeiden.

In Folge eines Wassereintritts in die Ansaugleitung, z. B. durch regennasse Fahrbahn, kann es gegebenenfalls zu einer Kontamination des Messelements kommen. In diesem Spritzwasser enthaltene natürliche Anteile an gelösten Salzen rufen dann einen Kennliniendrift des Messelements in Folge Salzkrustenaufbau auf der Membran des Sensorteils hervor. Durch die Neigung des Messkörpers wird zwar ein abgeschotteter Bereich gebildet, es gelangen aber trotzdem Flüssigkeitspartikel in den Messkanal.

Aus der DE 197 41 031 A1 ist eine Messvorrichtung mit einem Einlasskanal bekannt, in der durch Gestaltung zweier Wände des Einlasskanals weiterhin eine Beschleunigung der Strömung im Einlasskanal beibehalten werden kann, die bekanntermassen nur zu einer Stabilisierung der Strömung des Mediums im Einlasskanal, insbesondere im Messkanal, führt.

Aus der DE 198 15 654 A1 ist eine Messvorrichtung zum Messen der Masse eines in einer Leitung strömenden Mediums, insbesondere der Ansaugluftmasse einer Brennkraftmaschine bekannt, welche weist ein von dem strömenden Medium umströmtes Meßelement aufweist, das in einem in der Leitung vorgesehenen Strömungskanal der Meßvorrichtung angeordnet ist. Dabei erstreckt sich der Strömungskanal zwischen einer mit der Leitung verbundenen Einlaßöffnung und zumindest einer stromabwärts der Einlaßöffnung in die Leitung mündenden Auslaßöffnung entlang einer Hauptströmungsrichtung. Der Strömungskanal verzweigt sich an einer zwischen der Einlaßöffnung und dem Meßelement angeordneten ersten Trennstelle in einen Meßkanal, in welchem das Meßelement angeordnet ist, und einen ersten Umgehungskanal, welcher das Meßelement in der Hauptströmungsrichtung umgeht.

### Vorteile der Erfindung

Die erfindungsgemässe Vorrichtung mit den kennzeichnenden Merkmalen des Anspruchs 1 hat demgegenüber den Vorteil, dass auf einfache Art und Weise ein Messelement vor Flüssigkeit geschützt wird.

Ein Flüssigkeitsabscheidungselement in einem Kanal ist zumindest teilweise labyrinthartig auszubilden, weil dadurch Flüssigkeit ausgeschieden werden kann, aber Flüssigkeit von Aussen nicht in den Kanal eindringen kann. Es ist vorteilhaft, das Flüssigkeitsabscheidungselement in einer Innenwandung eines Umlenkkanals der Vorrichtung auszubilden, weil dadurch die Abscheidung verbessert wird.

Das Flüssigkeitsabscheidungselements weist ineinander verschachtelte ringbogenförmige Elemente auf, die produktionstechnisch einfach herzustellen sind. Es ist vorteilhaft, den Strömungswiderstand des Flüssigkeitsabscheidungselements gegenüber dem Strömungswiderstand eines Messkanals zu erhöhen, weil dadurch der grösste Anteil des gasförmigen Anteils des strömenden Mediums im Messkanal verbleibt.

Weiterhin vorteilhaft ist es, in dem Einlasskanal ein Umlenkelement vorzusehen, dass die Strömung von der Innenwand umlenkt, weil dadurch die Umlenkung der Strömung erleichtert wird.

Für eine gute Abscheidung von Flüssigkeit ist es vorteilhaft, dass in dem Umlenkkanal eine Abrisskante vorhanden ist, die verhindert, dass sich angelagertes Wasser als Wandfilm in den Messkanal bewegt.

Für eine Stabilisierung des Messsignals ist es vorteilhaft, dass sich der Strömungsquerschnitt des Einlass- und/oder Auslasskanals in Strömungsrichtung verjüngt.

### Zeichnung

Ausführungsbeispiele der Erfindung sind in der Zeichnung vereinfacht dargestellt und in der nachfolgenden Beschreibung näher erläutert.

### Es zeigen

Figur 1 eine erfindungsgemässe Vorrichtung,
Figur 2 einen Ausschnitt eines Schnittes aus Figur 1,
Figur 3 einen Schnitt entlang der Linie III-III in Figur 2,
Figur 4 einen Schnitt entlang der Linie IV-IV in Figur 2, und Figur 5 ein weiteres Ausführungsbeispiel der erfindungsgemässen Vorrichtung.

### Beschreibung der Ausführungsbeispiele

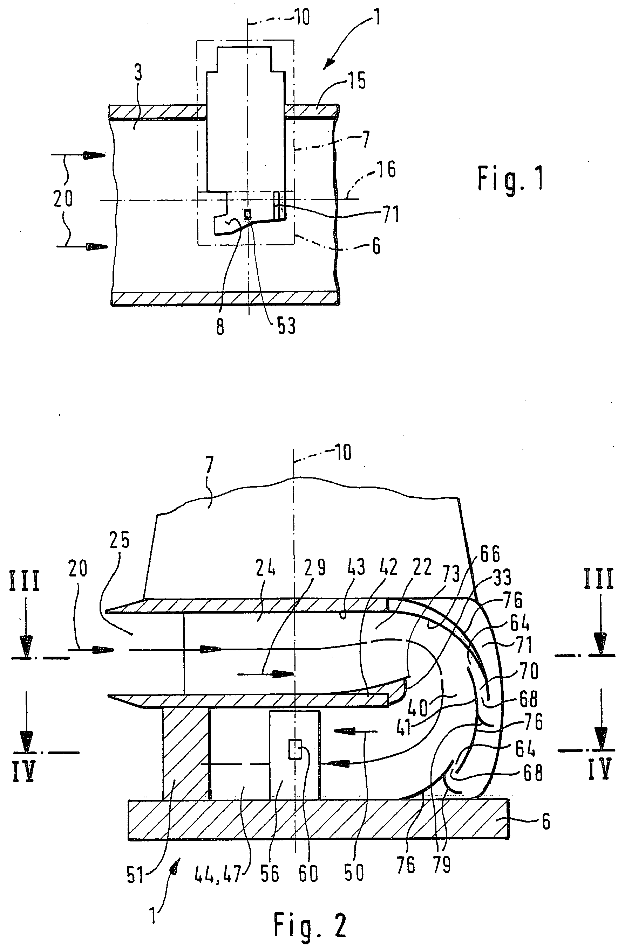

In Figur 1 ist schematisch gezeigt, wie eine erfindungsgemässe Vorrichtung 1 in einer Leitung 3, in der das Medium, ein Gas-Flüssigkeitsgemisch strömt, eingebaut ist.
Die Vorrichtung 1 besteht aus einem Messgehäuse 6, gekennzeichnet durch ein unteres strich-punktiert gezeichnetes Rechteck, und einem Trägergehäuse 7, gekennzeichnet durch ein oberes strich-punktiert gezeichnetes Rechteck, in dem z. B. eine Auswerteelektronik untergebracht ist. Dabei können Messgehäuse 6 und Trägergehäuse 7 einteilig ineinander übergehen , oder Einzelteile sein, die miteinander verbunden sind. Das Messgehäuse 6 und das Trägergehäuse 7 haben eine gemeinsame Längsachse 10, die z.B. auch eine Mittelachse sein kann. Das Trägergehäuse 7 ragt bspw. zum Teil aus der Leitung 3 heraus.
Das Messgehäuse 6 hat eine Seitenfläche 8, die in der Zeichnungsebene liegt.
Die Vorrichtung 1 ist in eine Wandung 15 der Leitung 3 beispielsweise steckbar eingeführt. Die Wandung 15 aus Kunststoff oder Metall begrenzt einen Strömungsquerschnitt, in dessen Mitte sich in Richtung des strömenden Mediums, parallel zur Wandung 15 eine Mittelachse 16 erstreckt. Die Richtung des strömenden Mediums, im folgenden als Hauptströmungsrichtung bezeichnet, ist durch entsprechende Pfeile 20 gekennzeichnet und verläuft dort von links nach rechts.

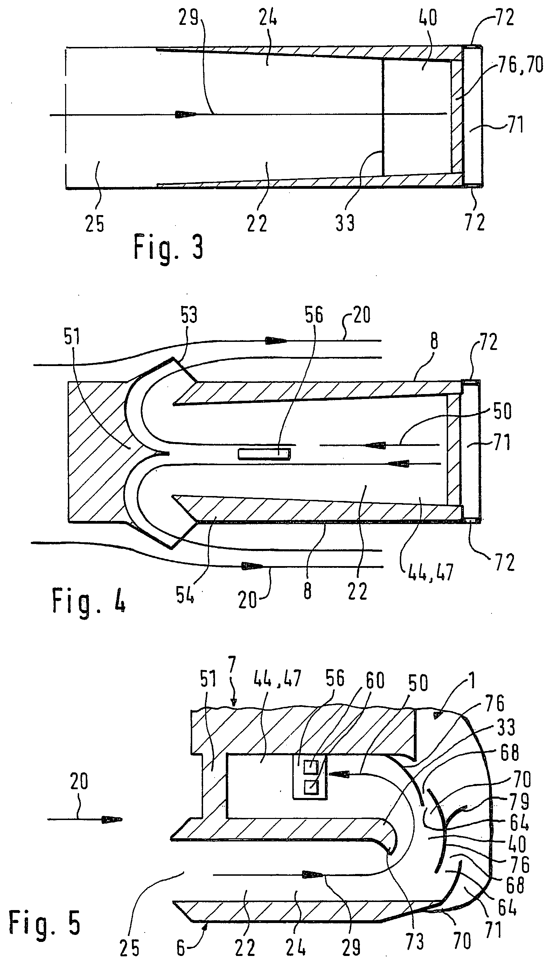

Figur 2 zeigt die Draufsicht auf das Messgehäuse 6 in einer Schnittebene parallel zur Zeichnungsebene in Figur 1 mit einem Kanal 22, der einen Einlasskanal 24 hat, in den das Medium durch eine Einlassöffnung 25 strömt. In dem Einlasskanal 24 gibt es eine Einlasskanalströmungsrichtung 29. Am Ende des Einlasskanals 24 ist ein Umlenkelement 33 angeordnet, das die Strömung von einer Innenwand in einen Umlenkkanal 40 umlenkt, wodurch dahinter eine Ablösung bewirkt und eine Phasenseparation der einzelnen Gemischbestandsteile verbessert wird. In dem Umlenkkanal 40 wird das strömende Medium umgelenkt und strömt in einen Auslasskanal 44, der zumindest teilweise auch einen Messkanal 47 bildet. In dem Auslasskanal 44 herrscht eine Auslasskanalströmungsrichtung 50. In dem Messkanal 47 strömt das Medium an zumindest einem Messelement 60 vorbei, dass auf einem Sensorträger 56 angeordnet ist. Am Ende des Auslasskanals 44 trifft das Medium auf ein Ausströmelement 51, wodurch das Medium umgelenkt wird und so in die Leitung 3 zurückströmt. Durch das Ausströmelement 51 wird die Strömungsrichtung des Mediums im Auslasskanal 44 zumindest teilweise um die Längsachse 10 gedreht wird. Das durch zumindest eine Auslassöffnung 53 (Fig. 4) austretende Medium strömt dann in etwa in der Hauptströmungsrichtung 20. Dadurch wird das Messsignalverhalten bei Rückströmungen verbessert.
Die Auslassöffnung 53 bzw. der Auslasskanal 44 kann aber auch wie in der DE 197 41 031 A1 gestaltet sein, die Teil dieser Offenbarung sein soll.

In dem Umlenkkanal 40 ist an seiner äusseren Peripherie ein Abscheidungselement 70 angeordnet, das bspw. an seiner der Hauptströmungsrichtung 20 zugewandten Innenwandung 41 labyrinthartig ausgebildet ist. Das Abscheidungselement 70 hat zumindest einen Abscheidungseingang 64 und zumindest einen Abscheidungsausgang 68, die den Umlenkkanal 40 mit der Leitung 3 verbinden und durch die eine an der Wandung abgeschiedene Flüssigkeit aus dem Umlenkkanal 40 in die Leitung 3 gelangt.
Um zu verhindern, dass zuviel Gas den Einlasskanal 24 durch das Abscheidungselement 70 verlässt, ist der Strömungswiderstand des Abscheidungselements 70 gegenüber dem des Einlass 24- und Auslasskanals 44 erhöht.

Im Einlasskanal 24 oder im Umlenkkanal 40 ist eine scharfe Abströmkante 73 bspw. an dem Umlenkelement 33 angeordnet, die verhindert, dass eine an einer unteren Seitenwand 42 des Einlasskanals 24 angelagerte Flüssigkeit, bspw. Wasser, die Umlenkung in dem Messkanal 47 als Wandfilm in Richtung des Messelements 60 mitvollführt. Der Wandfilm löst sich an der Abströmkante 73 von der Seitenwand 42 des Einlasskanals 24 und wird von der Strömung mitgerissen. Durch die grössere Trägheit der Flüssigkeit gegenüber dem Gas trifft die Flüssigkeit bspw. auf die äussere Innenwandung 41 des Umlenkkanals 40 und kann dort wieder einen Wandfilm bilden. Dieser Wandfilm wandert durch den Abscheidungseingang 64 in das Abscheidungselement 70 und verlässt es durch den Abscheidungsausgang 68 in einen Hinterraum 71. Das Medium, das in dem Umlenkkanal 40 umgelenkt und durch Zentrifugalkräfte an die Innenwandung 41 gedrückt wird, schiebt dabei den Wandfilm in den Abscheidungseingang 64. An einer oberen Seitenwand 43 des Einlasskanals 24, die der unteren Seitenwand 42 bspw. gegenüberliegt, braucht sich der Wandfilm nicht von der Seitenwand zu lösen, sondern schiebt sich direkt in den Abscheidungseingang 64.
Flüssigkeiten in dem Kanal 22, die keinen Wandfilm bilden, treffen auf die Innenwandung 41 und werden dadurch aus dem Kanal 22 ausgeschieden.
Das labyrinthartige Abscheidungselement 70 besteht beispielsweise aus drei Ringbogenelementen 76, die ineinander verschachtelt sind. Im Bereich der Abscheidungsausgänge 68 ist zumindest ein Abweiser 79 angeordnet, der vor aus der Leitung 3 eindringendem Wasser oder Flüssigkeit schützt.

Figur 3 zeigt einen Schnitt entlang der Linie III-III der Figur 2.
Der Kanal 22 verjüngt sich im Einlasskanal 24 in Strömungsrichtung 29, so dass eine Stabilisierung der Strömung stattfindet.
Der Hinterraum 71 hat an der Seitenfläche 8 längs der Längsachse 10 Schlitze 72, durch die die Flüssigkeit, die abgeschieden worden ist, wieder in den Kanal 3 gelangt, in dem die Flüssigkeit keine negativen Effekte mehr hervorruft.

Figur 4 zeigt einen Schnitt entlang der Linie IV-IV der Figur 2.
Der Auslasskanal 44 verjüngt sich in Auslasskanalströmungsrichtung 50 ebenfalls. Nachdem das strömende Medium an dem Sensorträger 56 mit dem Messelement 60 vorbeigeströmt ist, trifft es auf das Ausströmelement 51. Das Ausströmelement 51 ist bspw. W-förmig ausgebildet und lenkt die Auslasskanalströmungsrichtung 50 um, so dass das Medium durch zumindest eine Auslassöffnung 53 wieder in die Leitung 3 gelangt und wieder in Hauptströmungsrichtung 20 weiterströmt. In diesem Ausführungsbeispiel gibt es zwei Auslassöffnungen 53.
Das Ausströmelement 51 ragt über eine Seitenfläche 54 des Messgehäuses 6 hinaus. Die Hauptströmung 3 verursacht am Ausströmelement 51 im Bereich der Auslassöffnung 53 ein Unterdruckgebiet (Ablösung) und damit eine Sogwirkung auf die Strömung im Messkanal 44. Ferner wird durch den Überstand des Ausströmelements 51 über die Seitenfläche 54 eine phasenweise vorhandene Rückströmung in den Messkanal 44 eingekoppelt und gemessen.

Figur 5 zeigt ein weiteres Ausführungsbeispiel der erfindungsgemässen Vorrichtung 1. Der Unterschied zu dem Ausführungsbeispiel gemäss Figur 2 besteht im wesentlichen darin, dass der Auslasskanal 44 dem Trägergehäuse 7 am nächsten ist und der Einlasskanal 24 an einem unteren Ende des Messgehäuses 6 angeordnet ist. Weiterhin hat der Sensorträger 56 zwei Messelemente 60, die bspw. den Volumenstrom und den Druck messen.

## Patentansprüche

1. Vorrichtung (1) zur Bestimmung zumindest eines Parameters eines in einer Leitung (3) entlang einer Hauptströmungsrichtung (20) strömenden Mediums, bestehend aus einem Gas-Flüssigkeitsgemisch, insbesondere der Ansaugluft für eine Brennkraftmaschine,
mit einem in der Leitung (3) vorgesehenen Messgehäuse (6),
mit einem im Messgehäuse (6) angeordneten Kanal (22), der folgende Eigenschaften hat:
• der Kanal (22) unterteilt sich in einen Einlasskanal (24), einen Umlenkkanal (40) und einen Auslasskanal (44),
• der Kanal (22) hat eine Einlassöffnung (25), an die sich der Einlasskanal (24) anschließt, an den sich der Umlenkkanal (40) anschließt, in welches das Medium vom Einlasskanal (24) strömt und umgelenkt wird, um dann durch den Auslasskanal (44) zu zumindest einer an einer Außenfläche (8,54) des Messgehäuses (6) in die Leitung (3) ausmündenden Auslassöffnung (53) zu strömen,
• ein Teil des Kanals (22) bildet einen Messkanal (47), und mit zumindest einem sich in dem Messkanal (47) befindlichen und vom strömenden Medium umströmten Messelement (60),
wobei in dem Umlenkkanal (40) ein Flüssigkeitsabscheidungselement (70) integriert ist und das Flüssigkeitsabscheidungselement (70) im Bereich einer Innenwandung (66) des Umlenkkanals (40) ausgebildet ist und zumindest einen Abscheidungseingang (64) und zumindest einen Abscheidungsausgang (68) hat,
**dadurch gekennzeichnet, dass** das Flüssigkeitsabscheidungselement (70) zumindest teilweise labyrinthartig aus drei ineinander verschachtelten Ringbogenelementen (76) ausgebildet ist.

2. Vorrichtung nach Anspruch 1, **dadurch gekennzeichnet, dass** der Strömungswiderstand des Flüssigkeitsabscheidungselements (70) gegenüber dem Strömungswiderstand des Messkanals (47) erhöht ist.

3. Vorrichtung nach Anspruch 1,
**dadurch gekennzeichnet, dass**
in einem strömungsabwärtigen Ende des Einlasskanals (24) ein Umlenkelement (33) vorhanden ist.

4. Vorrichtung nach Anspruch 3,
**dadurch gekennzeichnet, dass**
an dem Umlenkelement (33) eine Abrisskante (73) angeordnet ist.

5. Vorrichtung nach Anspruch 1 oder 3,
**dadurch gekennzeichnet,**
**dass** die Vorrichtung (1) das Messgehäuse (6) und ein Trägergehäuse (7) aufweist,
**dass** das Messgehäuse (6) und das Trägergehäuse (7) eine Längsachse (10) haben,
**dass** Einlasskanal (24) und Auslasskanal (44) entlang der Längsachse (10) übereinander angeordnet sind, und
**dass** der Einlasskanal (24) dem Trägergehäuse (7) am nächsten ist.

6. Vorrichtung nach Anspruch 1,
**dadurch gekennzeichnet,**
**dass** die Vorrichtung (1) das Messgehäuse (6) und ein Trägergehäuse (7) aufweist,
**dass** das Messgehäuse (6) und das Trägergehäuse (7) eine Längsachse (10) haben,
**dass** Einlasskanal (24) und Auslasskanal (44) entlang der Längsachse (10) übereinander angeordnet sind, und
**dass** der Auslasskanal (44) dem Trägergehäuse (7) am nächsten ist.

7. Vorrichtung nach einem oder mehreren der Ansprüche 1, 3 oder 5,
**dadurch gekennzeichnet, dass**
sich ein Strömungsquerschnitt des Einlasskanals (24) in Strömungsrichtung (29) hin zum Umlenkkanal (40) verjüngt.

8. Vorrichtung nach Anspruch 1 oder 6,
**dadurch gekennzeichnet, dass**
sich der Strömungsquerschnitt des Auslasskanals (44) in Strömungsrichtung (50) hin zur Auslassöffnung (53) verjüngt.

9. Vorrichtung nach einem oder mehreren der Ansprüche 1 oder 5 bis 8, **dadurch gekennzeichnet, dass**
zumindest ein Teil des Einlasskanals (24) und zumindest ein Teil des Auslasskanals (44) geneigt gegenüber der Hauptströmungsrichtung (20) verlaufen.

## Claims

1. Device (1) for determining at least one parameter of a medium flowing in a line (3) in a main flow direction (20), composed of a gas fluid mixture, in particular of the intake air for an internal combustion engine;
having a measuring housing (6) which is provided in the line (3),
having a duct (22) which is arranged in the measuring housing (6) and which has the following properties:
• the duct (22) is divided into an inlet duct (24), a diversion duct (40) and an outlet duct (44),
• the duct (22) has an inlet opening (25) which is adjoined by the inlet duct (24), which is adjoined by the diversion duct (40) into which the medium from the inlet duct (24) flows and is diverted, in order then to flow through the outlet duct (44) to at least one outlet opening (53) which opens into the line (3) at an outer surface (8, 54) of the measuring housing (6),
• part of the duct (22) forms a measuring duct (47), and having at least one measuring element (60) which is located in the measuring duct (47) and around which the flowing medium flows,
wherein a liquid separation element (70) is integrated into the diversion duct (40), and the liquid separation element (70) is formed in the region of an inner wall (66) of the diversion duct (40) and has at least one separation inlet (64) and at least one separation outlet (68), **characterized in that** the liquid separation element (70) is formed at least partially in a labyrinth-like manner from three annular arc elements (76) which are interleaved one in the other.

2. Device according to Claim 1,
**characterized in that**
the flow resistance of the liquid separation element (70) is increased compared to the flow resistance of the measuring duct (47).

3. Device according to Claim 1,
**characterized in that** a diversion element (33) is present at a downstream end of the inlet duct (24).

4. Device according to Claim 3,
**characterized in that**
a breakaway edge (73) is arranged on the diversion element (33).

5. Device according to Claim 1 or 3,
**characterized in that**
the device (1) has the measuring housing (6) and a carrier housing (7),
**in that** the measuring housing (6) and the carrier housing (7) have a longitudinal axis (10),
**in that** the inlet duct (24) and outlet duct (44) are arranged one above the other along the longitudinal axis (10), and
**in that** the inlet duct (24) is closest to the carrier housing (7).

6. Device according to Claim 1,
**characterized in that**
the device (1) has the measuring housing (6) and a carrier housing (7),
**in that** the measuring housing (6) and the carrier housing (7) have a longitudinal axis (10),
**in that** the inlet duct (24) and outlet duct (44) are arranged one above the other along the longitudinal axis (10), and
**in that** the outlet duct (44) is closest to the carrier housing (7).

7. Device according to one or more of Claims 1, 3 or 5,
**characterized in that**
a flow cross section of the inlet duct (24) tapers in the flow direction (29) towards the diversion duct (40).

8. Device according to Claim 1 or 6,
**characterized in that**
the flow cross section of the outlet duct (44) tapers in the flow direction (50) towards the outlet opening (53).

9. Device according to one or more of Claims 1 or 5 to 8,
**characterized in that**
at least part of the inlet duct (24) and at least part of the outlet duct (44) run inclined with respect to the main flow direction (20).

## Revendications

1. Dispositif (1) pour déterminer au moins un paramètre d'un agent s'écoulant dans une conduite (3) le long d'une direction d'écoulement principale (20), composé d'un mélange gaz-liquide, notamment de l'air aspiré destiné à un moteur à combustion interne ;
avec un boîtier de mesure (6) prévu dans la conduite (3) ;
avec un canal (22) disposé dans le boîtier de mesure (6), ayant les propriétés suivantes :
- le canal (22) est subdivisé en un canal d'admission. (24), un canal de déviation (40) et un canal d'échappement (44) ;
- le canal (22) a une ouverture d'admission (25) au niveau de laquelle le canal d'admission (24) est raccordé, au niveau duquel le canal de déviation (40) est raccordé, dans lequel l'agent circule en partant du canal d'admission (24) et est dévié, pour ensuite s'écouler à travers le canal d'échappement (44) jusqu'à atteindre au moins une ouverture d'échappement (53) débouchant, au niveau d'une surface extérieure (8, 54) du boîtier de mesure (6), dans la conduite (3) ;
- une partie du canal (22) forme un canal de mesure (47), et avec au moins un élément de mesure (60) se trouvant dans le canal de mesure (47) et traversé par l'agent en circulation ;
un élément de séparation de liquide (70) étant intégré dans le canal de déviation (40) et l'élément de séparation de liquide (70) étant réalisé dans la région d'une paroi intérieure (66) du canal de déviation (40) et ayant au moins une entrée de séparation (64) et au moins une sortie de séparation (68) ;
**caractérisé en ce que** l'élément de séparation de liquide (70) est réalisé au moins en partie sous la forme d'un labyrinthe composé de trois éléments annulaires (76) imbriqués les uns dans les autres.

2. Dispositif selon la revendication 1, **caractérisé en ce que** la résistance à l'écoulement de l'élément de séparation de liquide (70) est accrue par rapport à la résistance à l'écoulement du canal de mesure (47).

3. Dispositif selon la revendication 1, **caractérisé en ce qu'**un élément de déviation (33) est présent dans une extrémité, située en aval de l'écoulement, du canal d'admission (24).

4. Dispositif selon la revendication 3, **caractérisé en ce qu'**un bord d'arrachement (73) est disposé au niveau de l'élément de déviation (33).

5. Dispositif selon la revendication 1 ou 3, **caractérisé en ce que** :
le dispositif (1) comporte le boîtier de mesure (6) et un boîtier de maintien (7) ;
le boîtier de mesure (6) et le boîtier de maintien (7) ont un axe longitudinal (10) ;
le canal d'admission (24) et le canal d'échappement (44) sont disposés l'un au-dessus de l'autre le long de l'axe longitudinal (10) ; et
le canal d'admission (24) suit le carter de maintien (7).

6. Dispositif selon la revendication 1, **caractérisé en ce que** :
le dispositif (1) comporte le boîtier de mesure (6) et un boîtier de maintien (7) ;
le boîtier de mesure (6) et le boîtier de maintien (7) ont un axe longitudinal (10) ;
le canal d'admission (24) et le canal d'échappement (44) sont disposés l'un au-dessus de l'autre le long de l'axe longitudinal (10) ; et
le canal d'échappement (44) suit le boîtier de maintien (7).

7. Dispositif selon l'une quelconque des revendications 1, 3 ou 5 ou plusieurs d'entre elles, **caractérisé en ce qu'**une section transversale d'écoulement du canal d'admission (24) se rétrécit dans la direction d'écoulement (29) jusqu'au canal de déviation (40).

8. Dispositif selon la revendication 1 ou 6, **caractérisé en ce que** la section transversale d'écoulement du canal d'échappement (44) se rétrécit dans la direction d'écoulement (50) jusqu'à l'ouverture d'échappement (53).

9. Dispositif selon l'une quelconque des revendications 1 ou 5 à 8 ou plusieurs d'entre elles, **caractérisé en ce qu'**au moins une partie du canal d'admission (24) et au moins une partie du canal d'échappement (44) s'étendent de façon inclinée par rapport à la direction d'écoulement principale (20).
